(19) Europäisches Patentamt
European Patent Office
Office européen des brevets

(11) **EP 3 948 193 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **20713231.7**

(22) Anmeldetag: **18.03.2020**

(51) Internationale Patentklassifikation (IPC):
***G01K 7/01*** *(2006.01)*

(52) Gemeinsame Patentklassifikation (CPC):
**G01K 7/01;** G01K 2217/00

(86) Internationale Anmeldenummer:
**PCT/EP2020/057371**

(87) Internationale Veröffentlichungsnummer:
**WO 2020/200779 (08.10.2020 Gazette 2020/41)**

(54) **VERFAHREN UND VORRICHTUNG ZUM BESTIMMEN EINER TEMPERATUR EINER LEISTUNGSELEKTRONIK**

METHOD AND DEVICE FOR DETERMINING THE TEMPERATURE OF A POWER ELECTRONICS UNIT

PROCÉDÉ ET DISPOSITIF DE DÉTERMINATION D'UNE TEMPÉRATURE D'UNE ÉLECTRONIQUE DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2019 DE 102019204425**

(43) Veröffentlichungstag der Anmeldung:
**09.02.2022 Patentblatt 2022/06**

(73) Patentinhaber: **Robert Bosch GmbH 70442 Stuttgart (DE)**

(72) Erfinder: **HEEB, Michael 70184 Stuttgart (DE)**

(56) Entgegenhaltungen:
**WO-A1-2016/124296 DE-A1- 102013 219 373**

- LUO HAOZE ET AL: **"Online High-Power P-i-N Diode Chip Temperature Extraction and Prediction Method With Maximum Recovery Current di/dt", IEEE TRANSACTIONS ON POWER ELECTRONICS, INSTITUTE OF ELECTRICAL AND ELECTRONICS ENGINEERS, USA, vol. 30, no. 5, 1 May 2015 (2015-05-01), pages 2395 - 2404, XP011568939, ISSN: 0885-8993, [retrieved on 20141223], DOI: 10.1109/ TPEL.2014.2342377**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Bestimmen einer Temperatur einer Leistungselektronik, die zumindest eine Kommutierungsschaltung und eine durch die Kommutierungsschaltung bestromte/bestrombare Last aufweist, wobei die Kommutierungsschaltung eine erste Halbleiterschaltereinrichtung, die einen ersten Halbleiterschalter und optional eine erste Diode aufweist, und eine zweite Diode umfasst, wobei die zweite Diode und die Last parallel zueinander mit dem ersten Halbleiterschalter verbunden sind, wobei im Anschluss an ein Leitendschalten des ersten Halbleiterschalters ein Stromverlauf eines durch die zweite Diode fließenden elektrischen Stroms zumindest während eines in der zweiten Diode bewirkten Rückstroms überwacht wird, und wobei in Abhängigkeit von dem Stromverlauf eine Temperatur einer Sperrschicht der zweiten Diode bestimmt wird.

Außerdem betrifft die Erfindung eine Vorrichtung zur Durchführung des eingangs genannten Verfahrens.

Ferner betrifft die Erfindung eine Leistungselektronik mit einer derartigen Vorrichtung.

Stand der Technik

Leistungshalbleiter, beispielsweise Leistungshalbleiterschalter oder Dioden, einer Leistungselektronik sind im Betrieb der Leistungselektronik enormen Belastungen ausgesetzt. Um die Leistungshalbleiter vor thermischer Überlastung zu schützen, wird häufig eine Temperatur der Leistungshalbleiter beziehungsweise der Leistungselektronik bestimmt und die Leistungselektronik in Abhängigkeit von der bestimmten Temperatur betrieben.

Zum Bestimmen der Temperatur ist es bekannt, NTC-Temperatursensoren in die Leistungselektronik zu integrieren. Außerdem ist es bekannt, eine temperaturabhängige elektrische Halbleitereigenschaft eines Leistungshalbleiters der Leistungselektronik zu ermitteln und die Temperatur des Leistungshalbleiters in Abhängigkeit von der ermittelten temperaturabhängigen elektrischen Halbleitereigenschaft zu bestimmen. Beispielsweise handelt es sich bei der Durchlassspannung eines Leistungshalbleiters um eine derartige temperaturabhängige elektrische Halbleitereigenschaft.

Aus der Veröffentlichung "Online High-Power p-i-n Diode Junction Temperature Extraction With Reverse Recovery Fall Storage Charge", IEEE Trans. on Power Electronics, pp. 2558-2567, April 2017 (Luo et al.) geht ein Verfahren zum Bestimmen einer Temperatur einer Leistungselektronik der eingangs genannten Art hervor. Die Leistungselektronik umfasst dabei eine Kommutierungsschaltung und eine durch die Kommutierungsschaltung bestromte/bestrombare Last. Die Kommutierungsschaltung weist eine erste Halbleiterschaltereinrichtung, die einen ersten Halbleiterschalter und eine erste Diode umfasst, und eine zweite Diode auf. Die zweite Diode und die Last sind dabei parallel zueinander mit dem ersten Halbleiterschalter verbunden. Das Vorhandensein der ersten Diode ist zur Ausbildung der Kommutierungsschaltung optional. Der erste Halbleiterschalter und die zweite Diode bilden insofern eine Kommutierungsschaltung aus, als dass ein in Durchlassrichtung durch die zweite Diode fließender elektrischer Strom im Anschluss an ein Leitendschalten des ersten Halbleiterschalters auf den ersten Halbleiterschalter kommutiert. Das bedeutet, dass der durch die zweite Diode fließende Strom abnimmt und ein durch den ersten Halbleiterschalter fließender elektrischer Strom zeitgleich zunimmt, wobei ein durch die Last fließender Laststrom konstant bleibt. Gemäß Luo et al. wird im Anschluss an das Leitendschalten des ersten Halbleiterschalters ein Stromverlauf des durch die zweite Diode fließenden Stroms während eines in der zweiten Diode bewirkten Rückstroms überwacht. Unter einem Rückstrom ist dabei ein elektrischer Strom zu verstehen, der entgegen der Durchlassrichtung einer Diode, beispielsweise der zweiten Diode, durch die Diode fließt. Der Rückstrom kommt dadurch zustande, dass im Anschluss an einen in Durchlassrichtung der Diode fließenden Strom restliche Ladungsträger in einer Raumladungszone der Diode vorhanden sind, und dass diese aus der Raumladungszone entfernt werden. Gemäß Luo et al. wird zum Überwachen des Stromverlaufs eine mit dem Stromverlauf korrespondierende elektrische Spannung einer parasitären Induktivität der Kommutierungsschaltung während des Auftretens des Rückstroms gemessen, wobei dann in Abhängigkeit von einer Amplitude eines Spannungsverlaufs der Spannung der parasitären Induktivität die Temperatur der Sperrschicht der zweiten Diode bestimmt wird. Ein weiteres Verfahren zum Bestimmen einer Temperatur einer Leistungselektronik ist in der WO 2016/124296 A1 beschrieben.

Offenbarung der Erfindung

Das erfindungsgemäße Verfahren mit den Merkmalen des Anspruchs 1 hat den Vorteil, dass die Temperatur der Sperrschicht der zweiten Diode zuverlässig ermittelt wird. Erfindungsgemäß ist hierzu vorgesehen, dass in Abhängigkeit von dem Stromverlauf eine Differenz zwischen einem Stromwert eines durch die Kommutierungsschaltung fließenden Schaltungsstroms einerseits und einem durch den Rückstrom bewirkten Extremal-Stromwert andererseits ermittelt wird, und dass die Temperatur der Sperrschicht der zweiten Diode in Abhängigkeit von der Differenz bestimmt wird. Unter dem durch den Rückstrom bewirkten Extremal-Stromwert ist dabei ein Maximum oder ein Minimum des Stromverlaufs während des Rückstroms durch die zweite Diode zu verstehen. In der Regel tritt der Extremal-Stromwert als ein Minimum in Erscheinung, weil es sich bei dem Rückstrom um einen elektrischen Strom entgegen der Durchlassrichtung der zweiten Diode handelt. In Abhängigkeit von der Vorgehensweise beim Ermitteln des Extremal-Stromwertes beziehungsweise des Stromverlaufs kann der Extremal-Stromwert allerdings auch als Maximum in Erscheinung treten. Es wird davon ausgegangen, dass der Extremal-Stromwert des Rückstroms beziehungsweise die Differenz mit der Temperatur der Sperrschicht der zweiten Diode korreliert, sodass die Temperatur der Sperrschicht der zweiten Diode in Abhängigkeit von dem Extremal-Stromwert beziehungsweise der Differenz ermittelbar ist. Bei dem Extremal-Stromwert des Rückstroms beziehungsweise der Differenz handelt es sich also um eine temperaturabhängige elektrische Halbleitereigenschaft. Unter dem Stromwert des Schaltungsstroms ist ein Stromwert eines elektrischen Stroms zu verstehen, der durch zumindest ein Element der Kommutierungsschaltung fließt. Der Stromwert des Schaltungsstroms wird in Abhängigkeit von dem Stromverlauf ermittelt.

Erfindungsgemäss wird hierzu der Stromverlauf vor oder nach dem Auftreten des in der zweiten Diode bewirkten Rückstroms berücksichtigt.

Gemäß einer bevorzugten Ausführungsform ist vorgesehen, dass die Temperatur der Sperrschicht der zweiten Diode in Abhängigkeit von einem Korrekturwert ermittelt wird, der mit einem Stromwert eines durch die Last fließenden Laststroms korrespondiert. Es wird davon ausgegangen, dass vor dem Leitendschalten des ersten Halbleiterschalters ein elektrischer Strom durch die zweite Diode fließt, dessen Stromwert dem Stromwert des durch die Last fließenden Laststroms entspricht. Weiterhin wird davon ausgegangen, dass der Stromwert des vor dem Leitendschalten des ersten Halbleiterschalters durch die zweite Diode fließenden elektrischen Stroms beziehungsweise der Stromwert des Laststroms den Extremal-Stromwert des Rückstroms beeinflusst. Durch das Berücksichtigen des Stromwertes des durch die Last fließenden Laststroms in Form des Korrekturwertes wird demnach die Genauigkeit beim Bestimmen der Temperatur der Sperrschicht der zweiten Diode gesteigert.

Vorzugsweise wird der durch die zweite Diode fließende Strom zum Überwachen des Stromverlaufs gemessen. Daraus ergibt sich der Vorteil, dass der Stromverlauf direkt zur Verfügung steht. Dadurch wird die Auswertung beziehungsweise das Bestimmen der Temperatur der Sperrschicht der zweiten Diode vereinfacht. Vorzugsweise wird der Stromverlauf durch die zweite Diode direkt und potentialfrei gemessen. Das Messen des Stromverlaufs geschieht beispielsweise mittels eines Hall-Sensors, eines Rogowski-Sensors oder dergleichen. Alternativ oder zusätzlich dazu wird der Stromverlauf vorzugsweise direkt und potentialgebunden gemessen. Hierzu wird eine an einem elektrischen Widerstand anliegende elektrische Spannung beziehungsweise ein Spannungsverlauf dieser Spannung gemessen und es wird mittels des Ohm'schen Gesetzes der Stromverlauf in Abhängigkeit von dem Spannungsverlauf berechnet. Weil zum Ermitteln des Stromverlaufs der Spannungsverlauf lediglich mit einem Korrekturfaktor, der mit einem Widerstandswert des elektrischen Widerstands korreliert, multipliziert werden muss, wird auch in diesem Fall davon ausgegangen, dass der Stromverlauf direkt gemessen wird.

Gemäß einer bevorzugten Ausführungsform ist vorgesehen, dass ein Spannungsverlauf einer parasitären Induktivität erfasst wird, und dass in Abhängigkeit von dem erfassten Spannungsverlauf der Stromverlauf ermittelt wird. Daraus ergibt sich der Vorteil, dass das Verfahren technisch einfach durchführbar ist. Es wird davon ausgegangen, dass der Spannungsverlauf mit einer Steigung des Stromverlaufs korrespondiert. Somit ist der Stromverlauf durch Integration des Spannungsverlaufs der parasitären Induktivität ermittelbar.

Hierzu wird vorzugsweise die nachfolgende Gleichung (1.1) verwendet, wobei $\Delta V_{SS}$ einem Spannungswert der parasitären Induktivität, $L_{par}$ einer Induktivität der parasitären Induktivität und $I_D$ einem Stromwert des Stromverlaufs entspricht.

$$\Delta V_{SS} = -L_{par} \times \frac{dI_D}{dt} \qquad (1.1)$$

In diesem Fall tritt der Extremal-Stromwert dann in der Regel als Maximum in Erscheinung.

Vorzugsweise wird der Stromverlauf vor dem Auftreten des in der zweiten Diode bewirkten Rückstroms überwacht, wobei der Stromwert des durch die Kommutierungsschaltung fließenden Schaltungsstroms in Abhängigkeit von dem Stromverlauf vor dem Auftreten des Rückstroms ermittelt wird. Vorzugsweise wird als Stromwert des Schaltungsstroms ein vor dem Auftreten des Rückstroms beziehungsweise vor dem Kommutieren des Stroms von der zweiten Diode auf den ersten Halbleiterschalter auftretender Plateau-Stromwert ermittelt. Daraus ergibt sich der Vorteil, dass in Abhängigkeit von der ermittelten Differenz unmittelbar die Temperatur der Sperrschicht der zweiten Diode bestimmbar ist. Alternativ dazu wird als Stromwert des Schaltungsstroms ein Stromwert während des Kommutierens des Stroms von der zweiten Diode auf den ersten Halbleiterschalter ermittelt.

Gemäß einer bevorzugten Ausführungsform ist vorgesehen, dass der Stromverlauf nach dem Auftreten des in der zweiten Diode bewirkten Rückstroms überwacht wird, wobei in Abhängigkeit von dem Stromverlauf ein nach dem Auftreten des Rückstroms auftretender Plateau-Stromwert ermittelt wird, wobei ein Maximalbetrag des Rückstroms in Abhängigkeit von der Differenz einerseits und dem Plateau-Stromwert andererseits ermittelt wird, und wobei die Temperatur der Sperrschicht der zweiten Diode in Abhängigkeit von dem Maximalbetrag des Rückstroms bestimmt wird. Durch ein derartiges Vorgehen wird die Genauigkeit des Bestimmens der Temperatur der zweiten Diode gesteigert. Vorzugsweise wird zum Ermitteln des Maximalbetrags des Rückstroms der Plateau-Stromwert von der Differenz subtrahiert.

Vorzugsweise wird die Temperatur der Sperrschicht der zweiten Diode in Abhängigkeit von einer an der Leistungselektronik anliegenden Zwischenkreisspannung bestimmt. Bei der Zwischenkreisspannung handelt es sich um die elektrische Spannung, die durch eine mit der Leistungselektronik verbundene Strom- oder Spannungsquelle bereitgestellt wird. Es wird davon ausgegangen, dass auch die an der Leistungselektronik anliegende Zwischenkreisspannung den Extremal-Stromwert beeinflusst. Durch das Berücksichtigen der Zwischenkreisspannung wird demnach die Genauigkeit beim Bestimmen der Temperatur der Sperrschicht der zweiten Diode gesteigert.

Gemäß einer bevorzugten Ausführungsform ist vorgesehen, dass die Temperatur der Sperrschicht der zweiten Diode in Abhängigkeit von einer Zeitdauer eines Leitendschaltens des ersten Halbleiterschalters bestimmt wird. Unter der Zeitdauer des Leitendschaltens ist dabei die Zeitdauer zu verstehen, die der erste Halbleiterschalter benötigt, um von einem nichtleitenden beziehungsweise sperrenden Zustand in einen leitenden Zustand überzugehen. Es wird davon ausgegangen, dass die Zeitdauer des Leitendschaltens des ersten Halbleiterschalters den Extremal-Stromwert derart beeinflusst, dass eine Verringerung der Zeitdauer, also ein schnelleres Leitendschalten des ersten Halbleiterschalters, eine Erhöhung des als Maximum auftretenden Extremal-Stromwertes beziehungsweise eine Verringerung des als Minimum auftretenden Extremal-Stromwertes bewirkt.

Vorzugsweise wird die Temperatur der Sperrschicht der zweiten Diode mithilfe eines Kennfeldes und/oder einer Lookup-Tabelle bestimmt. Sowohl das Kennfeld als auch die Lookup-Tabelle sind geeignete Maßnahmen um die Abhängigkeit des Extremal-Stromwertes von der Zwischenkreisspannung und/oder dem Stromwert des Laststroms beim Bestimmen der Temperatur der Sperrschicht der zweiten Diode zu berücksichtigen.

Gemäß einer bevorzugten Ausführungsform ist vorgesehen, dass der Stromverlauf und/oder der Spannungsverlauf entweder auf einer von der ersten Halbleiterschaltereinrichtung abgewandten Seite der zweiten Diode oder auf einer von der zweiten Diode abgewandten Seite der ersten Halbleiterschaltereinrichtung gemessen wird. Der Extremal-Stromwert des in der zweiten Diode bewirkten Rückstroms ist auf beiden der genannten Seiten erfassbar. Somit sind beide Seiten zum Messen des Stromverlaufs und des Spannungsverlaufs geeignet. Wird der Stromverlauf auf der von der ersten Halbleiterschaltereinrichtung abgewandten Seite der zweiten Diode gemessen, so tritt der Extremal-Stromwert in der Regel als Minimum in Erscheinung. Wird der Stromverlauf auf der von der zweiten Diode abgewandten Seite der ersten Halbleiterschaltereinrichtung gemessen, so tritt der Rückstrom als mit dem Rückstrom korrespondierender Überstrom in Erscheinung, sodass der Extremal-Stromwert dann als Maximum in Erscheinung tritt.

Vorzugsweise weist die Leistungselektronik zur Ausbildung der Leistungselektronik als Halbbrücke eine zweite Halbleiterschaltereinrichtung auf, die einen zweiten Halbleiterschalter und die zweite Diode aufweist, wobei im Anschluss an ein Leitendschalten des zweiten Halbleiterschalters der Stromverlauf während eines in der ersten Diode bewirkten elektrischen Rückstroms überwacht wird, und wobei in Abhängigkeit von dem Stromverlauf während des in der ersten Diode bewirkten Rückstroms eine Temperatur einer Sperrschicht der ersten Diode bestimmt wird. Wie vorstehend beschrieben, ist der Extremal-Stromwert der zweiten Diode sowohl auf der von der zweiten Diode abgewandten Seite der ersten Halbleiterschaltereinrichtung als auch auf der von der ersten Halbleiterschaltereinrichtung abgewandten Seite der zweiten Diode erfassbar. Daraus ergibt sich, dass ein Extremal-Stromwert während des Auftretens des in der ersten Diode bewirkten Rückstroms ebenfalls auf beiden dieser Seiten erfassbar ist. Halbbrücken werden in der Regel derart angesteuert, dass der durch die Last fließende Laststrom einen sinusförmigen Verlauf aufweist. Hierzu werden die Halbbrücken beziehungsweise die Halbleiterschalter der Halbbrücken vorzugsweise pulsweitenmoduliert angesteuert. Dabei sind in einem Zeitraum, in dem der Laststrom einen positiven Stromwert aufweist beispielsweise der erste Halbleiterschalter und die zweite Diode aktiv, sodass diesen beiden Elemente oder eines dieser beiden Elemente Strom leitet. In diesem Zeitraum ist dann die Temperatur der Sperrschicht der zweiten Diode durch das Verfahren bestimmbar ist. In einem Zeitraum, in dem der Laststrom einen negativen Stromwert aufweist sind dann der zweite Halbleiterschalter und die erste Diode aktiv, sodass in diesem Zeitraum die Temperatur der Sperrschicht der ersten Diode durch das Verfahren bestimmbar ist. Vorzugsweise werden der Stromverlauf während des Auftretens des in der zweiten Diode bewirkten Rückstroms und der Stromverlauf während des Auftretens des in der ersten Diode bewirkten Rückstroms auf derselben Seite beziehungsweise mittels desselben Messgeräts überwacht. Daraus ergibt sich der Vorteil, dass mittels desselben Messgerätes sowohl die Temperatur der Sperrschicht der ersten Diode als auch die Temperatur der Sperrschicht der zweiten Diode bestimmbar ist. Insbesondere ist die Leistungselektronik als Halbbrücke ausgebildet, ohne dass im Anschluss an das Leitendschalten des zweiten Halbleiterschalters die Temperatur der Sperrschicht der ersten Diode bestimmt wird.

Gemäß einer bevorzugten Ausführungsform ist vorgesehen, dass das Überwachen des Stromverlaufs in Abhängigkeit von einem Zeitpunkt eines Ausschaltens des zweiten Halbleiterschalters gestartet wird. Der Zeitpunkt, zu dem der zweite Halbleiterschalter ausgeschaltet, also nichtleitend geschaltet wird, wird durch ein Steuergerät der Kommutierungsschaltung beziehungsweise der Leistungselektronik vorgegeben. Der Zeitpunkt, zu dem der zweite Halbleiterschalter ausgeschaltet wird, ist somit bereits bekannt und deshalb vorteilhaft als Trigger beziehungsweise Startsignal für das Überwachen des Stromverlaufs geeignet.

Vorzugsweise wird ein Integral des Rückstroms ermittelt, wobei die Temperatur der Sperrschicht der zweiten Diode in Abhängigkeit von dem Integral bestimmt wird. Hierdurch wird die Störanfälligkeit des Verfahrens verringert. Das Integral des Verlaufs des Rückstroms korrespondiert dabei mit einer Sperrverzugsladung $Q_{rr}$ der zweiten Diode. Auch bei der Sperrverzugsladung handelt es sich um eine temperaturabhängige elektrische Halbleitereigenschaft. Vorzugsweise wird das Integral des Verlaufs des Rückstroms während der gesamten Zeitdauer des Auftretens des Rückstroms bestimmt. Alternativ dazu wird vorzugsweise nur ein Zeitabschnitt der Zeitdauer beim Bestimmen des Integrals berücksichtigt.

Die erfindungsgemäße Vorrichtung zum Bestimmen einer Temperatur einer Leistungselektronik, die zumindest eine Kommutierungsschaltung und eine durch die Kommutierungsschaltung bestromte/bestrombare Last aufweist, wobei die Kommutierungsschaltung eine erste Halbleiterschaltereinrichtung, die einen ersten Halbleiterschalter und optional eine erste Diode aufweist, und eine zweite Diode umfasst, wobei die zweite Diode und die Last parallel zueinander mit dem ersten Halbleiterschalter verbunden sind, zeichnet sich mit den Merkmalen des Anspruchs 14 dadurch aus, dass die Vorrichtung als Steuergerät speziell dazu hergerichtet ist, bei bestimmungsgemäßem Gebrauch das erfindungsgemäße Verfahren durchzuführen. Auch daraus ergeben sich die bereits genannten Vorteile. Weitere bevorzugte Merkmale und Merkmalskombinationen ergeben sich aus dem zuvor Beschriebenen sowie aus den Ansprüchen.

Die erfindungsgemäße Leistungselektronik, die zumindest eine Kommutierungsschaltung und eine durch die Kommutierungsschaltung bestromte/bestrombare Last aufweist, wobei die Kommutierungsschaltung eine erste Halbleiterschaltereinrichtung, die einen ersten Halbleiterschalter und optional eine erste Diode aufweist, und eine zweite Diode umfasst, wobei die zweite Diode und die Last parallel zueinander mit dem ersten Halbleiterschalter verbunden sind, zeichnet sich mit den Merkmalen des Anspruchs 15 durch die erfindungsgemäße Vorrichtung aus. Auch daraus ergeben sich die bereits genannten Vorteile. Vorzugsweise weist die Leistungselektronik zur Ausbildung der Kommutierungsschaltung als Halbbrücke eine zweite Halbleiterschaltereinrichtung auf, wobei die zweite Halbleiterschaltereinrichtung einen zweiten Halbleiterschalter und die zweite Diode umfasst. Insbesondere sind der erste Halbleiterschalter und/oder der zweite Halbleiterschalter als IGBT ausgebildet. Bei der ersten Diode und/oder der zweiten Diode handelt es sich dann vorzugsweise um getrennt von den Halbleiterschaltern ausgebildete und antiparallel zu den Halbleiterschaltern geschaltete Dioden. Vorzugsweise sind der erste Halbleiterschalter und/oder der zweite Halbleiterschalter als MOSFET ausgebildet. Bei der ersten Diode und/oder der zweiten Diode handelt es sich dann vorzugsweise um Body-Dioden der als MOSFET ausgebildeten Halbleiterschalter. Alternativ dazu handelt es sich bei der ersten und/oder der zweiten Diode vorzugsweise um getrennt von den als MOSFET ausgebildeten Halbleiterschaltern ausgebildete und antiparallel zu den Halbleiterschaltern geschaltete Dioden. In diesem Fall sind der erste Halbleiterschalter und/oder der zweite Halbleiterschalter vorzugsweise als Silizium basierte MOSFETs ausgebildet.

Im Folgenden wird die Erfindung anhand der Zeichnungen näher beschrieben, wobei gleiche und entsprechende Elemente in den Figuren mit den gleichen Bezugszeichen versehen sind. Dazu zeigen:

Figur 1    ein Schaltbild einer Leistungselektronik,

Figur 2    zwei Diagramme, in denen Stromverläufe durch eine Kommutierungsschaltung der Leistungselektronik dargestellt sind,

Figur 3    ein Diagramm, in dem ein Spannungsverlauf einer parasitären Induktivität und ein in Abhängigkeit von dem Spannungsverlauf ermittelter Stromverlauf dargestellt sind,

Figur 4    ein Verfahren zum Bestimmen einer Temperatur einer Diode der Leistungselektronik gemäß einem ersten Ausführungsbeispiel und

Figur 5    ein Verfahren zum Bestimmen der Temperatur der Diode gemäß einem zweiten Ausführungsbeispiel.

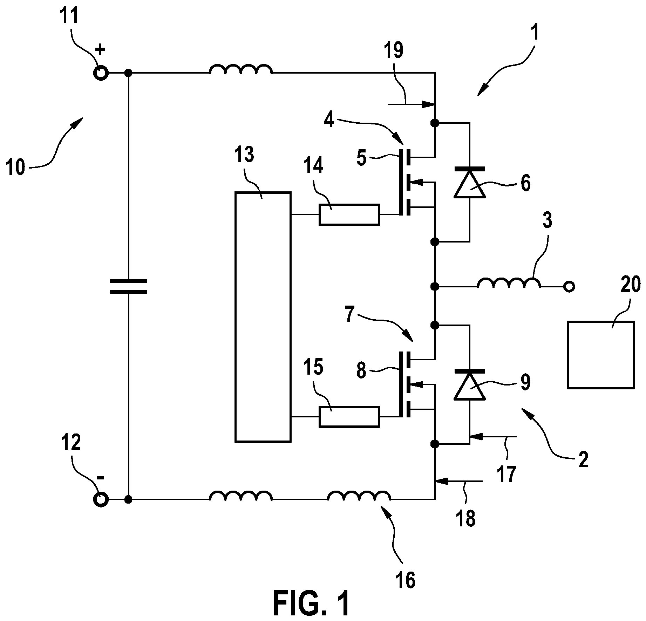

Figur 1 zeigt ein Schaltbild einer Leistungselektronik 1. Die Leistungselektronik 1 weist eine Kommutierungsschaltung 2 und eine Last 3 auf. Die Kommutierungsschaltung 2 ist vorliegend als Halbbrücke 2 ausgebildet. Hierzu weist die Kommutierungsschaltung 2 eine erste Halbleiterschaltereinrichtung 4 mit einem ersten Halbleiterschalter 5 und einer ersten Diode 6 auf. Außerdem weist die Kommutierungsschaltung 2 eine zweite Halbleiterschaltereinrichtung 7 mit einem zweiten Halbleiterschalter 8 und einer zweiten Diode 9 auf. Zur Ausbildung der Kommutierungsschaltung 2 ist es allerdings nicht notwendig, dass der erste Halbleiterschalter 5, der zweite Halbleiterschalter 8, die erste Diode 6 und die zweite Diode 9 vorhanden sind. Gemäß einem weiteren Ausführungsbeispiel der Kommutierungsschaltung 2 wird auf den ersten Halbleiterschalter 5 und optional auf die zweite Diode 9 verzichtet. Die Kommutierungsschaltung 2 ist dann als Einquadrantensteller ausgebildet und weist den zweiten Halbleiterschalter 8, die erste Diode 6 und optional die zweite Diode 9 auf. Gemäß noch einem weiteren Ausführungsbeispiel der Kommutierungsschaltung 2 wird auf den zweiten Halbleiterschalter 8 und optional auf die erste Diode 6 verzichtet. Die Kommutierungsschaltung 2 ist auch dann als Einquadrantensteller ausgebildet und weist den ersten Halbleiterschalter 5, die zweite Diode 9 und optional die erste Diode 6 auf.

Die zweite Diode 9 und die Last 3 sind parallel zueinander mit dem ersten Halbleiterschalter 5 verbunden. Die erste Diode 6 und die Last 3 sind parallel zueinander mit dem zweiten Halbleiterschalter 8 verbunden. Die Leistungselektronik 1 weist außerdem eine Spannungsquelle 10 auf, die einen Pluspol 11 und einen Minuspol 12 umfasst. Vorliegend ist der Pluspol 11 mit der ersten Halbleiterschaltereinrichtung 4 verbunden. Der Minuspol 12 ist mit der zweiten Halbleiterschaltereinrichtung 7 verbunden.

Die Leistungselektronik 1 weist außerdem eine Steuerschaltung 13 auf. Diese ist dazu ausgebildet, den ersten Halbleiterschalter 5 und den zweiten Halbleiterschalter 8 anzusteuern. Hierzu ist die Steuerschaltung 13 mittels eines ersten Widerstands 14 mit einem Gate des ersten Halbleiterschalters 5 und mittels eines zweiten Widerstands 15 mit einem Gate des zweiten Halbleiterschalters 8 verbunden. Die Steuerschaltung 13 ist dazu ausgebildet, die Halbleiterschalter 5 und 8 derart pulsweitenmoduliert anzusteuern, dass ein durch die Last 3 fließender elektrischer Laststrom einen sinusförmigen Verlauf aufweist. Dabei fließt ein elektrischer Strom durch die Last 3 einerseits und den ersten Halbleiterschalter 5 und/oder die zweite Diode 9 andererseits, wenn der sinusförmige Laststrom einen positiven Stromwert aufweist. Weist der sinusförmige Laststrom einen negativen Stromwert auf, fließt ein elektrischer Strom durch die Last 3 einerseits und den zweiten Halbleiterschalter 8 und/oder die erste Diode 6 andererseits.

Ferner weist die Kommutierungsschaltung 2 beziehungsweise die Leistungselektronik 1 eine parasitäre Induktivität 16 auf, die sich auf einer von der ersten Halbleiterschaltereinrichtung 4 abgewandten Seite der zweiten Diode 9 befindet.

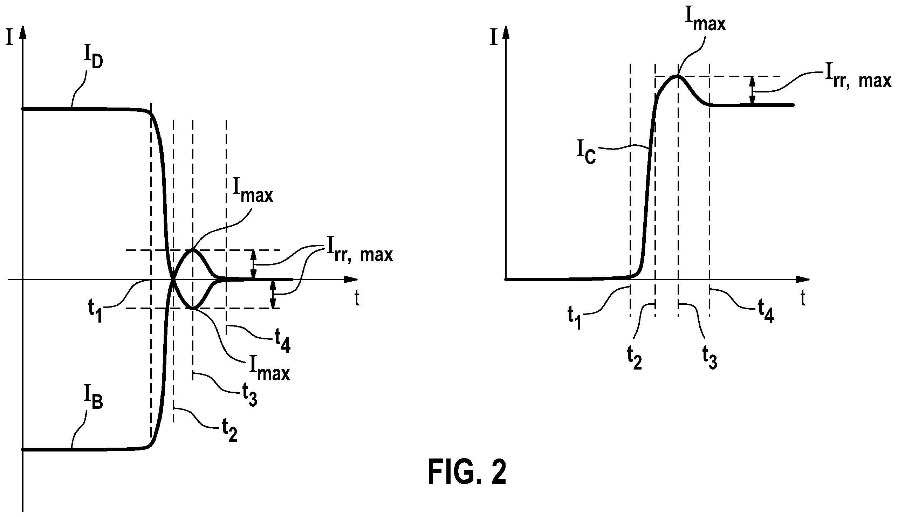

Im Folgenden werden mit Bezug auf Figur 2 verschiedene Stromverläufe eines durch die Kommutierungsschaltung 2 fließenden Schaltungsstroms erläutert. Das in Figur 2 auf der linken Seite dargestellte erste Diagramm zeigt einen Stromverlauf $I_D$. Der Stromverlauf $I_D$ beschreibt einen in Durchlassrichtung durch die zweite Diode 9 fließenden elektrischen Strom. Es wird dabei davon ausgegangen, dass der sinusförmige Laststrom einen positiven Stromwert aufweist. Es fließt also ein elektrischer Strom durch die Last 3 einerseits und den ersten Halbleiterschalter 5 und/oder die zweite Diode 9 andererseits. Beispielsweise ist der Stromverlauf $I_D$ an der in Figur 1 durch den Pfeil 17 markierten Stelle messbar. Vor einem ersten Zeitpunkt $t_1$ ist der erste Halbleiterschalter 5 nichtleitend. Ein Stromwert des durch die zweite Diode 9 fließenden elektrischen Stroms entspricht vor dem ersten Zeitpunkt $t_1$ im Wesentlichen dem Stromwert des durch die Last 3 fließenden Laststroms. Ab dem Zeitpunkt $t_1$ ist der erste Halbleiterschalter 5 zumindest teilweise leitend. Ab diesem Zeitpunkt kommutiert der durch die zweite Diode 9 fließende elektrische Strom auf den ersten Halbleiterschalter 5. Das bedeutet, dass zwischen dem Zeitpunkt $t_1$ und einem zweiten Zeitpunkt $t_2$ der Stromwert des durch die zweiten Diode 9 fließenden elektrischen Stroms abnimmt. Zeitgleich nimmt ein Stromwert eines durch den ersten Halbleiterschalter 5 fließenden elektrischen Stroms zu. Zu dem zweiten Zeitpunkt $t_2$ ist der Stromwert des durch die zweite Diode 9 fließenden Stroms 0. Im Anschluss an den Zeitpunkt $t_2$ werden restliche in einer Raumladungszone der zweiten Diode 9 vorhandene Ladungsträger aus der Raumladungszone entfernt. Hierdurch wird zwischen dem Zeitpunkt $t_2$ und einem Zeitpunkt $t_4$ ein elektrische Rückstrom, also ein entgegen der Durchlassrichtung der zweiten Diode 9 durch die zweite Diode 9 fließender Strom in der zweiten Diode 9 bewirkt. Zu einem Zeitpunkt $t_3$ weist der Rückstrom einen Extremal-Stromwert $I_{max}$, in diesem Fall ein Minimum, auf. Dieser Extremal-Stromwert $I_{max}$ beziehungsweise eine Höhe des Extremal-Stromwertes $I_{max}$ ist abhängig von einer Temperatur einer Sperrschicht der zweiten Diode 9. Es handelt sich also um eine temperaturabhängige elektrische Halbleitereigenschaft. Im Anschluss an den Zeitpunkt $t_4$ ist der Rückstrom beendet. Der Stromwert des durch die zweite Diode 9 fließenden Stroms ist dann im Wesentlichen 0. Bei der Differenz zwischen dem Extremal-Stromwert $I_{max}$ und einem im Anschluss an den Zeitpunkt $t_4$ auftretenden Plateau-Stromwert handelt es sich um den Maximalbetrag $I_{rr,max}$ des Rückstroms. Der Stromverlauf $I_B$ stellt ebenfalls den Stromverlauf durch die zweite Diode 9 dar. Allerdings ist der Stromverlauf $I_B$ im Vergleich zu dem Stromverlauf $I_D$ invertiert, so dass der Extremal-Stromwert $I_{max}$ in diesem Fall als Maximum in Erscheinung tritt. Der Stromverlauf $I_D$ und der Stromverlauf $I_B$ sind auch an der in Figur 1 durch den Pfeil 18 markierten Stelle messbar.

Das in Figur 2 auf der rechten Seite dargestellte zweite Diagramm zeigt einen Stromverlauf $I_C$. Dieser stellt den Strom dar, der an der in Figur 1 durch den Pfeil 19 markierten Stelle messbar ist. Es handelt sich also um den Strom, der in Durchlassrichtung durch den ersten Halbleiterschalter 5 fließt. Die Zeitpunkte $t_1$, $t_2$, $t_3$, und $t_4$ entsprechen dabei jeweils den in dem ersten Diagramm dargestellten Zeitpunkten. Vor dem Zeitpunkt $t_1$ ist der erste Halbleiterschalter 5 nichtleitend, sodass ein Stromwert des Stromverlaufs $I_C$ 0 ist. Wie aus dem zweiten Diagramm ersichtlich ist zeigt sich der zwischen den Zeitpunkten $t_2$ und $t_4$ entgegen der Durchlassrichtung durch die zweite Diode 9 fließende Rückstrom in dem Stromverlauf $I_C$ als Überstrom, wobei ein Maximalbetrag $I_{rr,max}$ des Überstroms dem Maximalbetrag $I_{rr,max}$ des Rückstroms entspricht. Im Anschluss an den Zeitpunkt $t_4$ entspricht der Stromwert des Stromverlaufs $I_C$ im Wesentlichen dem Stromwert des durch die Last 3 fließenden Laststroms.

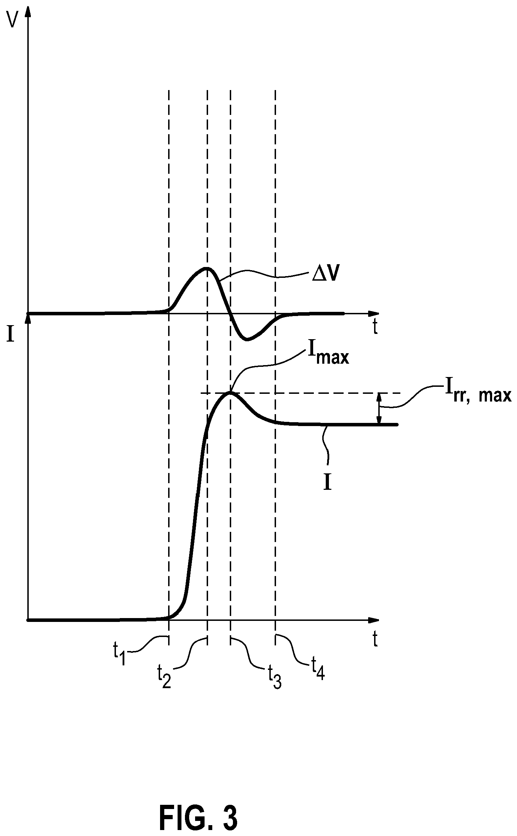

Figur 3 zeigt einen Spannungsverlauf $\Delta V$ einer an der parasitären Induktivität 16 anliegenden elektrischen Spannung. Auch dabei entsprechen die Zeitpunk-

te $t_1$, $t_2$, $t_3$, und $t_4$ den im ersten Diagramm der Figur 2 dargestellten Zeitpunkten. Zwischen den Zeitpunkten $t_1$ und $t_3$ weist die an der parasitären Induktivität 16 anliegende Spannung einen positiven Spannungswert auf. Zwischen den Zeitpunkten $t_3$ und $t_4$ weist die an der parasitären Induktivität 16 anliegenden Spannung einen negativen Spannungswert auf. Im Anschluss an den Zeitpunkt $t_4$ ist der Spannungswert im Wesentlichen 0. In Abhängigkeit von dem Spannungsverlauf $\Delta V$ ist ein Stromverlauf $I$ ermittelbar, der mit den Stromverläufen $I_B$, $I_D$ und $I_C$ korrespondiert. Hierzu wird der Spannungsverlauf $\Delta V$ integriert. Der ermittelte Stromverlauf $I$ entspricht dann dem messbaren Stromverlauf $I_C$.

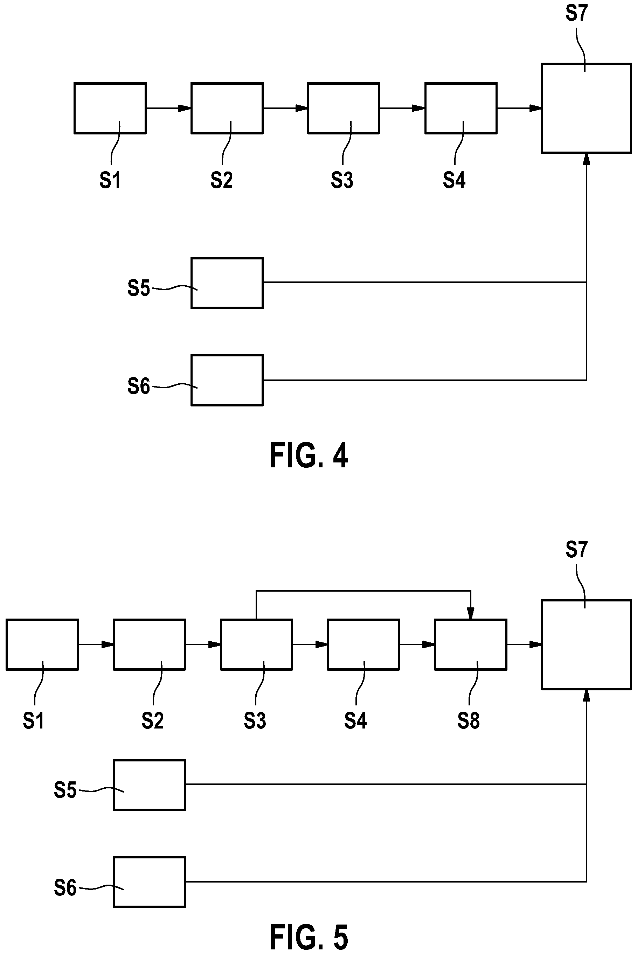

Im Folgenden wird mit Bezug auf Figur 4 ein erstes Ausführungsbeispiel eines Verfahrens zum Bestimmen der Temperatur der Sperrschicht der zweiten Diode 9 erläutert. Das Verfahren wird zu einem Zeitpunkt durchgeführt, zu dem der den sinusförmigen Verlauf aufweisende Laststrom durch die Last 3 einen positiven Stromwert aufweist. Analog dazu ist das Verfahren zum Bestimmen der Temperatur der Sperrschicht der ersten Diode 6 durchführbar, wenn der Laststrom durch die Last 3 einen negativen Stromwert aufweist.

In einem Schritt S1 wird das Überwachen des Stromverlaufs durch die zweite Diode 9 in Abhängigkeit von dem Erfassen eines Triggers beziehungsweise Startsignals gestartet. Vorliegend wird als Trigger ein Ausschalten, also nichtleitend Schalten, des zweiten Halbleiterschalters 8 erfasst. In einem Schritt S2 wird zum Überwachen des Stromverlaufs wahlweise der Strom an einer der durch die Pfeile 17, 18 oder 19 markierten Stellen oder die an der parasitären Induktivität 16 anliegende Spannung gemessen. Alternativ zu der Spannung der parasitären Induktivität 16 wird eine Spannung einer auf einer von der zweiten Halbleiterschaltereinrichtung 7 abgewandten Seite der ersten Halbleiterschaltereinrichtung 4 vorhandenen parasitären Induktivität gemessen. Wird in dem Schritt S2 die Spannung gemessen, so wird in einem Schritt S3 in Abhängigkeit von dem Spannungsverlauf der Spannung ein Stromverlauf ermittelt. Hierzu wird der Spannungsverlauf integriert. Im Anschluss daran wird auf den Schritt S4 verwiesen. Wird in dem Schritt S2 ein Strom gemessen, so wird direkt auf den Schritt S4 verwiesen.

In diesem Schritt S4 wird in Abhängigkeit von dem Stromverlauf eine Differenz zwischen einem zwischen den Zeitpunkten $t_2$ und $t_4$, also während des Auftretens des Rückstroms, auftretenden Extremal-Stromwert $I_{max}$ und einem Stromwert eines durch die Kommutierungsschaltung 2 fließenden Schaltungsstroms andererseits ermittelt. Bei dem Stromwert des Schaltungsstroms handelt es sich vorzugsweise um einen in Abhängigkeit von dem Stromverlauf ermittelten Stromwert. Vorzugsweise wird als Stromwert des Schaltungsstroms ein Stromwert des Stromverlaufs vor dem Zeitpunkt $t_2$, also vor dem Auftreten des Rückstroms, besonders bevorzugt vor dem Zeitpunkt $t_1$, also zu einem Zeitpunkt, zu dem der erste Halbleiterschalter 5 nichtleitend ist, gewählt. In einem Schritt S5 wird eine Zwischenkreisspannung, also eine zwischen dem Pluspol 11 und dem Minuspol 12 anliegende Spannung ermittelt beziehungsweise bereitgestellt. In einem Schritt S6 wird ein Stromwert eines durch die Last 3 fließenden Laststroms ermittelt beziehungsweise bereitgestellt. Vorzugsweise wird der durch die Last 3 fließende Laststrom in Abhängigkeit von dem Stromverlauf ermittelt. Alternativ dazu wird der Laststrom durch eine separate, der Last 3 zugeordnete Strommesseinrichtung ermittelt. In einem Schritt S7 wird in Abhängigkeit von der ermittelten Differenz, der Zwischenkreisspannung und dem durch die Last 3 fließenden Laststrom die Temperatur der Sperrschicht der zweiten Diode 9 ermittelt.

Figur 5 zeigt ein weiteres Ausführungsbeispiel des Verfahrens zum Bestimmen der Temperatur der Sperrschicht der zweiten Diode 9. Das in Figur 5 dargestellte Ausführungsbeispiel unterscheidet sich von dem in Figur 4 dargestellten Ausführungsbeispiel insbesondere dadurch, dass in Abhängigkeit von dem Stromverlauf ein im Anschluss an den Rückstrom, also nach dem Zeitpunkt $t_4$, auftretender Plateau-Stromwert ermittelt wird. In einem Schritt S8 wird dann in Abhängigkeit von der Differenz einerseits und dem Plateau-Stromwert andererseits ein Maximalbetrag $I_{rr,max}$ des Rückstroms ermittelt. In dem Schritt S7 wird dann die Temperatur der Sperrschicht der zweiten Diode 9 in Abhängigkeit von dem Maximalbetrag $I_{rr,max}$ des Rückstroms, der Zwischenkreisspannung und dem Stromwert des Laststroms bestimmt. Das in Figur 5 dargestellte zweite Ausführungsbeispiel weist verglichen mit dem in Figur 4 dargestellten Ausführungsbeispiel eine gesteigerte Genauigkeit auf.

Mit Bezug auf Figur 1 weist die Leistungselektronik 1 eine Vorrichtung 20 auf. Die lediglich schematisch dargestellte Vorrichtung 20 ist dazu ausgebildet, das Verfahren zum Bestimmen der Temperatur der Sperrschicht der zweiten Diode 9 durchzuführen. Hierzu ist die Vorrichtung 20 kommunikationstechnisch mit Messeinrichtungen verbunden, die der Vorrichtung 20 den Stromwert des durch die Last 3 fließenden Laststroms, die Zwischenkreisspannung, und die gemessenen Spannungswerte beziehungsweise die gemessenen Stromwerte bereitstellen.

**Patentansprüche**

1. Verfahren zum Bestimmen einer Temperatur einer Leistungselektronik (1), die zumindest eine Kommutierungsschaltung (2) und eine durch die Kommutierungsschaltung (2) bestromte/bestrombare Last (3) aufweist, wobei die Kommutierungsschaltung (2) eine erste Halbleiterschaltereinrichtung (4), die einen ersten Halbleiterschalter (5) und optional eine erste Diode (6) aufweist, und eine zweite Diode (9) umfasst, wobei die zweite Diode (9) und die Last (3) parallel zueinander mit dem ersten Halbleiterschalter (5) verbunden sind, wobei im Anschluss an ein Leitendschalten des ersten Halbleiterschalters (5) ein Stromverlauf eines durch die zweite Diode (9) fließenden elektrischen Stroms zumindest während eines in der zweiten Diode (9) bewirkten elektrischen Rückstroms überwacht wird, und wobei in Abhängigkeit von dem Stromverlauf eine Temperatur einer Sperrschicht der zweiten Diode (9) bestimmt wird, **dadurch gekennzeichnet, dass** in Abhängigkeit von dem Stromverlauf eine Differenz zwischen einem Stromwert eines, vor oder nach dem Auftreten des in der zweiten Diode bewirkten elektrischen Rückstroms, durch die Kommutierungsschaltung (2) fließenden Schaltungsstroms einerseits und einem durch den Rückstrom bewirkten Extremal-Stromwert ($I_{max}$) andererseits ermittelt wird, und dass die Temperatur der Sperrschicht der zweiten Diode (9) in Abhängigkeit von der Differenz bestimmt wird.

2. Verfahren nach Anspruch 1, **dadurch gekennzeichnet, dass** die Temperatur der Sperrschicht der zweiten Diode (9) in Abhängigkeit von einem Korrekturwert ermittelt wird, der mit einem Stromwert eines durch die Last (3) fließenden Laststroms korrespondiert.

3. Verfahren nach einem der vorhergehenden Ansprüche, **dadurch gekennzeichnet, dass** der durch die zweite Diode (9) fließende Strom zum Überwachen des Stromverlaufs gemessen wird.

4. Verfahren nach einem der vorhergehenden Ansprüche, **dadurch gekennzeichnet, dass** ein Spannungsverlauf einer parasitären Induktivität (16) erfasst wird, und dass in Abhängigkeit von dem erfassten Spannungsverlauf der Stromverlauf ermittelt wird.

5. Verfahren nach einem der Ansprüche, **dadurch gekennzeichnet, dass** der Stromverlauf vor dem Auftreten des in der zweiten Diode (9) bewirkten Rückstroms überwacht wird, wobei der Stromwert des durch die Kommutierungsschaltung (2) fließenden Schaltungsstroms in Abhängigkeit von dem Stromverlauf vor dem Auftreten des Rückstroms ermittelt wird.

6. Verfahren nach einem der vorhergehenden Ansprüche, **dadurch gekennzeichnet, dass** der Stromverlauf nach dem Auftreten des in der zweiten Diode (9) bewirkten Rückstroms überwacht wird, wobei in Abhängigkeit von dem Stromverlauf ein nach dem Auftreten des Rückstroms auftretender Plateau-Stromwert ermittelt wird, wobei ein Maximalbetrag ($I_{rr,max}$) des Rückstroms in Abhängigkeit von der Differenz einerseits und dem Plateau-Stromwert andererseits ermittelt wird, und wobei die Temperatur der Sperrschicht der zweiten Diode (9) in Abhängigkeit von dem Maximalbetrag ($I_{rr,max}$) des Rückstroms bestimmt wird.

7. Verfahren nach einem der vorhergehenden Ansprüche, **dadurch gekennzeichnet, dass** die Temperatur der Sperrschicht der zweiten Diode (9) in Abhängigkeit von einer an der Leistungselektronik (1) anliegenden Zwischenkreisspannung bestimmt wird.

8. Verfahren nach einem der vorhergehenden Ansprüche, **dadurch gekennzeichnet, dass** die Temperatur der Sperrschicht der zweiten Diode (9) in Abhängigkeit von einer Zeitdauer des Leitendschaltens des ersten Halbleiterschalters (5) bestimmt wird.

9. Verfahren nach einem der vorhergehenden Ansprüche, **dadurch gekennzeichnet, dass** die Temperatur der Sperrschicht der zweiten Diode (9) mithilfe eines Kennfeldes und/oder einer Lookup-Tabelle bestimmt wird.

10. Verfahren nach einem der vorhergehenden Ansprüche, **dadurch gekennzeichnet, dass** der Stromverlauf und/oder der Spannungsverlauf entweder auf einer von der ersten Halbleiterschaltereinrichtung (4) abgewandten Seite der zweiten Diode (9) oder auf einer von der zweiten Diode (9) abgewandten Seite der ersten Halbleiterschaltereinrichtung (4) gemessen wird.

11. Verfahren nach einem der vorhergehenden Ansprüche, **dadurch gekennzeichnet, dass** die Leistungselektronik (1) zur Ausbildung der Leistungselektronik (1) als Halbbrücke (2) eine zweite Halbleiterschaltereinrichtung (7) aufweist, die einen zweiten Halbleiterschalter (8) und die zweite Diode (9) aufweist, wobei im Anschluss an ein Leitendschalten des zweiten Halbleiterschalters (8) der Stromverlauf während eines in der ersten Diode (6) bewirkten elektrischen Rückstroms überwacht wird, und wobei in Abhängigkeit von dem Stromverlauf während des in der ersten Diode (6) bewirkten Rückstroms eine Temperatur einer Sperrschicht der ersten Diode (6) bestimmt wird.

12. Verfahren nach einem der vorhergehenden Ansprüche, **dadurch gekennzeichnet, dass** das Überwachen des Stromverlaufs in Abhängigkeit von einem Zeitpunkt eines Ausschaltens des zweiten Halbleiterschalters (8) gestartet wird.

13. Verfahren nach einem der vorhergehenden Ansprüche, **dadurch gekennzeichnet, dass** ein Integral des Rückstroms ermittelt wird, und dass die Temperatur der Sperrschicht der zweiten Diode (9) in Abhängigkeit von dem Integral bestimmt wird.

**14.** Vorrichtung (20) zum Bestimmen einer Temperatur einer Leistungselektronik (1), wobei die Leistungselektronik (1) zumindest eine Kommutierungsschaltung (2) und eine durch die Kommutierungsschaltung (2) bestromte/bestrombare Last (3) aufweist, wobei die Kommutierungsschaltung (2) eine erste Halbleiterschaltereinrichtung (4), die einen ersten Halbleiterschalter (5) und optional eine erste Diode (6) aufweist, und eine zweite Diode (9) umfasst, wobei die zweite Diode (9) und die Last (3) parallel zueinander mit dem ersten Halbleiterschalter (5) verbunden sind, **dadurch gekennzeichnet, dass** die Vorrichtung (20) als Steuergerät speziell dazu hergerichtet ist, bei bestimmungsgemäßem Gebrauch das Verfahren gemäß einem der Ansprüche 1 bis 13 durchzuführen.

**15.** Leistungselektronik (1), die zumindest eine Kommutierungsschaltung (2) und eine durch die Kommutierungsschaltung (2) bestromte/bestrombare Last (3) aufweist, wobei die Kommutierungsschaltung (2) eine erste Halbleiterschaltereinrichtung (4), die einen ersten Halbleiterschalter (5) und optional eine erste Diode (6) aufweist, und eine zweite Diode (9) umfasst, wobei die zweite Diode (9) und die Last (3) parallel zueinander mit dem ersten Halbleiterschalter (5) verbunden sind, **gekennzeichnet durch** die Vorrichtung (20) gemäß Anspruch 14.

**Claims**

**1.** Method for determining a temperature of a power electronics unit (1), which has at least one commutation circuit (2) and a load (3) that is/can be powered by the commutation circuit (2), wherein the commutation circuit (2) comprises a first semiconductor switch device (4), which has a first semiconductor switch (5) and optionally a first diode (6), and a second diode (9), wherein the second diode (9) and the load (3) are connected to the first semiconductor switch (5) in parallel with one another, wherein, after the first semiconductor switch (5) has been switched to be conducting, a current profile of an electrical current flowing through the second diode (9) is monitored at least while an electrical reverse current is produced in the second diode (9), and wherein a temperature of a barrier layer of the second diode (9) is determined in dependence on the current profile, **characterized in that** a difference between, for one part, a current value of a circuit current flowing through the commutation circuit (2) before or after the occurrence of the electrical reverse current produced in the second diode and, for the other, an extreme current value ($I_{max}$) produced by the reverse current is ascertained in dependence on the current profile, and **in that** the temperature of the barrier layer of the second diode (9) is determined in dependence on the difference.

**2.** Method according to Claim 1, **characterized in that** the temperature of the barrier layer of the second diode (9) is ascertained in dependence on a correction value that corresponds to a current value of a load current flowing through the load (3).

**3.** Method according to either of the preceding claims, **characterized in that** the current flowing through the second diode (9) is measured for the purpose of monitoring the current profile.

**4.** Method according to one of the preceding claims, **characterized in that** a voltage profile of a parasitic inductance (16) is captured, and **in that** the current profile is ascertained in dependence on the captured voltage profile.

**5.** Method according to one of the claims, **characterized in that** the current profile is monitored before the reverse current produced in the second diode (9) occurs, wherein the current value of the circuit current flowing through the commutation circuit (2) is ascertained in dependence on the current profile before the reverse current occurs.

**6.** Method according to one of the preceding claims, **characterized in that** the current profile is monitored after the reverse current produced in the second diode (9) occurs, wherein a plateau current value occurring after the reverse current occurs is ascertained in dependence on the current profile, wherein a maximum absolute value ($I_{rr,max}$) of the reverse current is ascertained in dependence on the difference, for one part, and on the plateau current value, for the other, and wherein the temperature of the barrier layer of the second diode (9) is determined in dependence on the maximum absolute value ($I_{rr,max}$) of the reverse current.

**7.** Method according to one of the preceding claims, **characterized in that** the temperature of the barrier layer of the second diode (9) is determined in dependence on an intermediate circuit voltage that is present at the power electronics unit (1).

**8.** Method according to one of the preceding claims, **characterized in that** the temperature of the barrier layer of the second diode (9) is determined in dependence on a time duration for switching the first semiconductor switch (5) to be conducting.

**9.** Method according to one of the preceding claims, **characterized in that** the temperature of the barrier layer of the second diode (9) is determined with the aid of a characteristic diagram and/or a lookup table.

**10.** Method according to one of the preceding claims, **characterized in that** the current profile and/or the voltage profile is measured either on a side of the second diode (9) facing away from the first semiconductor switch device (4) or on a side of the first semiconductor switch device (4) facing away from the second diode (9).

**11.** Method according to one of the preceding claims, **characterized in that**, for the formation of the power electronics unit (1) as a half bridge (2), the power electronics unit (1) has a second semiconductor switch device (7), which has a second semiconductor switch (8) and the second diode (9), wherein, after the second semiconductor switch (8) has been switched to be conducting, the current profile during an electrical reverse current produced in the first diode (6) is monitored, and wherein a temperature of a barrier layer of the first diode (6) is determined in dependence on the current profile during the reverse current produced in the first diode (6).

**12.** Method according to one of the preceding claims, **characterized in that** the monitoring of the current profile is started in dependence on a time point at which the second semiconductor switch (8) is being switched off.

**13.** Method according to one of the preceding claims, **characterized in that** an integral of the reverse current is ascertained, and **in that** the temperature of the barrier layer of the second diode (9) is determined in dependence on the integral.

**14.** Apparatus (20) for determining a temperature of a power electronics unit (1), wherein the power electronics unit (1) has at least one commutation circuit (2) and a load (3) that is/can be powered by the commutation circuit (2), wherein the commutation circuit (2) comprises a first semiconductor switch device (4), which has a first semiconductor switch (5) and optionally a first diode (6), and a second diode (9), wherein the second diode (9) and the load (3) are connected to the first semiconductor switch (5) in parallel with one another, **characterized in that** the apparatus (20), as a controller, is specifically configured for performing the method according to one of Claims 1 to 13 with proper use.

**15.** Power electronics unit (1), which has at least one commutation circuit (2) and a load (3) that is/can be powered by the commutation circuit (2), wherein the commutation circuit (2) comprises a first semiconductor switch device (4), which has a first semiconductor switch (5) and optionally a first diode (6), and a second diode (9), wherein the second diode (9) and the load (3) are connected to the first semiconductor switch (5) in parallel with one another, **characterized**

**by** the apparatus (20) according to Claim 14.

## Revendications

**1.** Procédé pour déterminer une température d'une électronique de puissance (1) qui comporte au moins un circuit de commutation (2) et une charge (3) excitée/pouvant être excitée par le circuit de commutation (2), le circuit de commutation (2) comprenant un premier dispositif de commutation à semi-conducteur (4), lequel comporte un premier commutateur à semi-conducteur (5) et facultativement une première diode (6), et comprenant une seconde diode (9), la seconde diode (9) et la charge (3) étant connectées en parallèle au premier commutateur à semi-conducteur (5), lors de la mise sous tension du premier commutateur à semi-conducteur (5), une courbe de courant d'un courant électrique circulant dans la seconde diode (9) étant surveillé au moins pendant la durée d'un courant inverse provoqué dans la seconde diode (9) et, en fonction de la courbe de courant, une température d'une couche barrière de la seconde diode (9) est déterminée, **caractérisé en ce que**, en fonction de la courbe de courant, une différence entre une valeur de courant d'un courant de circuit circulant dans le circuit de commutation (2), d'une part, et une valeur de courant extrême ($I_{max}$) provoquée par le courant inverse, d'autre part, est déterminée avant ou après l'apparition du courant électrique inverse provoqué dans la seconde diode, et **en ce que** la température de la couche barrière de la seconde diode (9) est déterminée en fonction de ladite différence.

**2.** Procédé selon la revendication 1, **caractérisé en ce que** la température de la couche barrière de la seconde diode (9) est déterminée en fonction d'une valeur de correction correspondant à une valeur de courant d'un courant de charge circulant dans la charge (3).

**3.** Procédé selon l'une des revendications précédentes, **caractérisé en ce que** le courant circulant dans la seconde diode (9) est mesuré pour surveiller la courbe de courant.

**4.** Procédé selon l'une des revendications précédentes, **caractérisé en ce qu'**une courbe de tension d'une inductance parasite (16) est détectée et **en ce que**, en fonction de la courbe de tension détectée, la courbe de courant est déterminée.

**5.** Procédé selon l'une des revendications, **caractérisé en ce que** la courbe de courant avant l'apparition du courant inverse provoqué dans la seconde diode (9) est surveillée, la valeur de courant du courant de circuit circulant dans le circuit de commutation (2) étant déterminée en fonction de la courbe de courant avant l'apparition du courant inverse.

6. Procédé selon l'une des revendications précédentes, **caractérisé en ce que** la courbe de courant, après l'apparition du courant inverse provoqué dans la seconde diode (9) est surveillée, une valeur de courant de plateau apparaissant après l'apparition du courant inverse étant déterminée en fonction de la courbe de courant, un niveau maximal ($I_{rr,max}$) du courant inverse étant déterminé en fonction de la différence, d'une part, et de la valeur de courant de plateau, d'autre part, et la température de la couche barrière de la seconde diode (9) étant déterminée en fonction du niveau maximal ($I_{rr,max}$) du courant inverse.

7. Procédé selon l'une des revendications précédentes, **caractérisé en ce que** la température de la couche barrière de la seconde diode (9) est déterminée en fonction d'une tension de circuit intermédiaire appliquée à l'électronique de puissance (1).

8. Procédé selon l'une des revendications précédentes, **caractérisé en ce que** la température de la couche barrière de la seconde diode (9) est déterminée en fonction d'une durée de la mise sous tension du premier commutateur à semi-conducteur (5).

9. Procédé selon l'une des revendications précédentes, **caractérisé en ce que** la température de la couche barrière de la seconde diode (9) est déterminée à l'aide d'un diagramme caractéristique et/ou d'une table de consultation.

10. Procédé selon l'une des revendications précédentes, **caractérisé en ce que** la courbe de courant et/ou la courbe de tension sont mesurées soit d'un côté de la seconde diode (9) qui est tourné à l'opposé du premier dispositif de commutation à semi-conducteur (4), soit d'un côté du premier dispositif de commutation à semi-conducteur (4) qui est tourné à l'opposé de la seconde diode (9).

11. Procédé selon l'une des revendications précédentes, **caractérisé en ce que** l'électronique de puissance (1) comporte, pour la réalisation de l'électronique de puissance (1), en tant que demi-pont (2), un second dispositif de commutation à semi-conducteur (7) comprenant un second commutateur à semi-conducteur (8) et une seconde diode (9), lors de la mise sous tension du second commutateur à semi-conducteur (8), la courbe de courant étant surveillée pendant la durée d'un courant électrique inverse provoqué dans la première diode (6) et, en fonction de la courbe de courant, une température d'une couche barrière de la première diode (6) étant déterminée pendant la durée du courant inverse provoqué dans la première diode (6).

12. Procédé selon l'une des revendications précédentes, **caractérisé en ce que** la surveillance de la courbe de courant est déclenchée en fonction d'un instant de mise hors tension du second commutateur à semi-conducteur (8).

13. Procédé selon l'une des revendications précédentes, **caractérisé en ce qu'**une intégrale du courant inverse est déterminée, et **en ce que** la température de la couche barrière de la seconde diode (9) est déterminée en fonction de ladite intégrale.

14. Dispositif (20) pour déterminer une température d'une électronique de puissance (1), l'électronique de puissance (1) comportant au moins un circuit de commutation (2) et une charge (3) excitée/pouvant être excitée par le circuit de commutation (2), le circuit de commutation (2) comprenant un premier dispositif de commutation à semi-conducteur (4), lequel comporte un premier commutateur à semi-conducteur (5) et facultativement une première diode (6), et comprenant une seconde diode (9), la seconde diode (9) et la charge (3) étant connectées en parallèle au premier commutateur à semi-conducteur (5), **caractérisé en ce que** le dispositif (20) est spécialement conçu sous forme d'appareil de commande destiné à mettre en œuvre le procédé selon l'une des revendications 1 à 13 lorsqu'il est utilisé conformément à sa destination.

15. Électronique de puissance (1) qui comporte au moins un circuit de commutation (2) et une charge (3) excitée/pouvant être excitée par le circuit de commutation (2), le circuit de commutation (2) comprenant un premier dispositif de commutation à semi-conducteur (4), lequel comporte un premier commutateur à semi-conducteur (5) et facultativement une première diode (6), et comprenant une seconde diode (9), la seconde diode (9) et la charge (3) étant connectées en parallèle au premier commutateur à semi-conducteur (5), **caractérisée par** le dispositif (20) selon la revendication 14.

FIG. 1

FIG. 2

**FIG. 3**

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016124296 A1

**In der Beschreibung aufgeführte Nicht-Patentliteratur**

- **LUO**. Online High-Power p-i-n Diode Junction Temperature Extraction With Reverse Recovery Fall Storage Charge. *IEEE Trans. on Power Electronics*, April 2017, 2558-2567